# EUROPEAN PATENT SPECIFICATION

(11) **EP 1 690 257 B1**
(45) Date of publication and mention of the grant of the patent: **10.03.2010**
(21) Application number: 04799159.1
(22) Date of filing: 16.11.2004
(51) Int. Cl.: G11B 19/02

(54) **SYSTEM AND METHOD FOR PROVIDING VISIBLE PHYSICAL FEEDBACK**
SYSTEME UND VERFAHREN ZUR BEREITSTELLUNG SICHTBARER PHYSISCHER RÜCKMELDUNGEN
SYSTEME ET PROCEDE PERMETTANT UNE RETROACTION PHYSIQUE VISIBLE

(30) Priority: 24.11.2003 EP 03104330
(43) Date of publication of application: 16.08.2006
(73) Proprietor: Koninklijke Philips Electronics N.V., 5621 BA Eindhoven (NL)
(72) Inventor: PLEUNIS, Johannes, M., NL-5656 AA Eindhoven (NL)
(74) Representative: Groenendaal, Antonius W. M.
(86) International application number: PCT/IB2004/052441
(87) International publication number: WO 2005/050636

(56) References cited:
- WO-A-03/016992
- US-B1- 6 201 772

## Description

### FIELD OF THE INVENTION

The present invention relates to methods of providing visible physical feedback; in particular, but not exclusively, the present invention relates to a method of providing visible physical feedback for an electronic system, for example for consumer digital audio equipment, for video recorders and for DVD-type records. Moreover, the invention also relates to user cards indicative of data content suitable for use with said system. Furthermore, the invention also relates to systems providing visible feedback according to said method.

### BACKGROUND OF THE INVENTION

In recent years, items of electronic equipment have become increasingly complex, especially those whose user interfaces are based on digital technology including associated digital displays. Such interfaces frequently each employ a keyboard for user data entry, a digital display such as a LCD for providing user information and a microprocessor coupled to the display for presenting information thereon and also connected to the keyboard for receiving information therefrom; the microprocessor is also coupled to other parts of associated apparatus to be controlled. Moreover, such interfaces are customarily incorporated into contemporary digital recording apparatus such as video recorders, DVD's, audio recorders and similar electronic consumer items. In operation, text is entered through the keyboard, and users are often obliged to browse through lists describing content presented on the display. Thus, such contemporary digital apparatus frequently present to their users complex menu structures; such structures are not very intuitive to a large group of potential users who may be unfamiliar with operating computer systems in general.

Such a problem has been appreciated in the prior art. For example, in a published United States patent no. US 6, 201, 772, there is described use of cards for disc reproduction apparatus. There is described a set of cards including a card with an identification mark for commanding access to a designated track number and another card with an identification mark for commanding access to an index number of a disc having recorded information thereon used in a disk reproduction apparatus. The cards include a pattern of holes for the identification marks used to command access to portions of the disk and for commanding specific operations on the disk. Thus, rather than using a complex microprocessor interface comprising data entry keyboard and associated visual data display, the user is capable of controlling the aforementioned reproduction apparatus without needing to use a keyboard for data entry.

Similarly, in another United States patent no. US 5, 285, 437, there is described an audio apparatus having a control function for use with cards. The apparatus is controllable with a card having at least one operation identifying feature related to a specific reproduction operation. On respective surfaces of the card, there are provided first and second items of visual data corresponding to the reproduction operation, for example "random play". The apparatus has a card inlet for receiving the card, an optical sensor for detecting the at least one feature, and a system controller for controlling the apparatus to realise the reproduction operation identified by the at least one feature. The at least one feature preferably corresponds to one or more holes formed in the card.

US 6,201,772 discloses a set of cards for a disk reproduction apparatus with a disk in the form of an audio CD having a plurality of areas, each assigned a track number, each of the areas having a plurality of portions, each assigned an index number, and recording information at each of the portions. The cards have an identification mark commanding access to the disk. A first card has an identification mark commanding access to a designated track number. A second card has an identification mark commanding access to a designated index number and a third card has an identification mark commanding a reproduction in which information in the area of the same index number for different track numbers is reproduced in order. The first card and second card are used for commanding an access to a predetermined index of a predetermined track, and the second card and third card are used for commanding the reproduction in the order of track numbers. A picture, character or the like is printed on the track-designating card and the index-designating card in accordance with the information recorded in the CD used. The identification marks have a plurality of identification holes for designating the track number or index number.

The inventor has appreciated that digital recorders are usually controlled through software-based menu structures providing lists of user options on an associated display, for example lists of possible programme material which is susceptible to being replayed. Although these interfaces are quite usable to people who are familiar with computers, there remains a large group of people who are of an opinion that digital interfaces contemporarily provided on consumer electronic apparatus are too complex. In particular, digital interfaces are found to be cumbersome when managing content, for example text on digital devices is entered through a keyboard, and users are obliged to browse through lists describing content. Thus, contemporary digital interfaces provided on many contemporary electronic consumer equipment are not intuitive.

The inventor has appreciated, in a manner akin to known art described in the foregoing, that a potential solution to the aforementioned problem of contemporary digital interfaces is provided by using a digital interface based on physical cards, in particular cards having a size similar to contemporary audio minidiscs and contemporary debit cards used for making payments. However, the inventor has devised a card-type interface which is believed to surpass known card-type interfaces.

### SUMMARY OF THE INVENTION

A first object of the present invention is to provide a digital interface for use in interfacing users to associated electronic apparatus.

A second object of the present invention is to provide a method of controlling electronic apparatus by using a card interface.

A third object of the present invention is to provide a card suitable for use in a digital interface for use in interfacing users to associated electronic apparatus.

According to a first aspect of the present invention, there is provided a method as defined in claim 1.

The invention is of advantage in that the system is capable of functioning to provide its users with an intuitive indication of data content in a manner akin to conventional data carriers, for example high-fidelity systems susceptible to replaying audio CD's, and yet able to handling remotely downloaded data content, for example from the Internet.

Preferably, in the method, the token interfacing means is subdivided into spatial sub-regions, each sub-region being associated with a specific type of corresponding operation on the data content represented by said at least one token when presented in spatial proximity of said sub-region.

Preferably, in the method, the token interfacing means is arranged to be capable of handling a pack comprising a plurality of said at least one token and performing said operation on at least one token in the pack.

Preferably, in the method, the computing means is arranged so as to prevent said data content from being subject to at least a sub-set of said operation when its corresponding token is spatially remote from the token interfacing means. Such an arrangement is of advantage in that the system is capable of appearing to its users to perform intuitively in a manner akin to a conventional recording and/or playback apparatus where data carriers presented thereto physically convey substantial data content. Preferably, in the method, said at least one token is provided with:
(a) a first region susceptible to being user-marked with user optically-readable information; and
(b) a second region susceptible to presenting information optically, said second region being arranged to be written to from the system for providing a user optically-readable indication of data content associated with said token.

Preferably, in the method, the system is arranged to interrogate said at least one token when spatially presented to the system for indicating to the system user-preferred data content to be subject to said operation. Such near proximity is capable of seeming to users of the system that said one or more tokens are susceptible of bearing substantial data to and/or from the system in a manner akin to contemporary audio/visual equipment such as CD players/recorders and DVD players/recorders.

Preferably, in the method, said at least one token is arranged to be interrogated from the system by at least one of: radio interrogation, optical interrogation, contact electrical interrogation, and magnetically-coupled electrical interrogation. At least a subset of such interrogation approaches is capable of being at least one of inexpensive and robust.

Preferably, in the method, said at least one token is provided with a unique identification code for use in enabling the system to identify said at least one token and thereby data content associated with said at least one token. By way of the code and the system itself bearing a record of data content corresponding to the code, the system is capable of associated data content stored within the system with presentation of the code to the system.

Preferably, in the method, said at least one token is provided with at least one corresponding region which is susceptible to being electronically programmed by the system to present visual information provided from the system, said visual information being related to data content associated with said at least one token. Such an electronically programmable visual-display region is of advantage in that the users of the system are capable of readily appreciating on rapid visual inspection data content represented by said at least one token. More preferably, in the method, said at least one region is provided with electrically-writable ink for use in providing user-readable visual information of data content associated with said at least one token. The use of electrically-writable ink is especially beneficial as it enables the system to erase, write and modify visual content present on said at least one token, thereby resulting in the system functioning in a manner akin to a contemporary DVD and/or CD recording/replaying apparatus. Most preferably, in the method, said at least one token is implemented in the form of at least one substantially plastics material planar substrate.

According to a second aspect of the present invention, there is provided a data token indicative of corresponding data content for use with a method according to the first aspect of the present invention.

According to a third aspect of the present invention, there is provided a pack of tokens comprising a plurality of tokens for use with a method according to the first aspect of the present invention.

According to a fourth aspect of the present invention, there is provided an electronic system for providing visible user physical feedback via at least one data token as defined in claim 13.

Preferably, in the system, the token interfacing means is subdivided into spatial sub-regions, each sub-region being associated with a specific type of corresponding operation on the data content represented by said at least one token when presented in spatial proximity of said sub-region.

Preferably, in the system, the computing means is arranged so as to prevent said data content from being subject to at least a sub-set of said operation when its corresponding token is spatially remote from the token interfacing means.

Preferably, in the system, the token interfacing means is arranged to be capable of handling a pack comprising a plurality of said at least one token and performing said operation on at least one token in the pack.

Preferably, in the system, said at least one token is provided with:
(a) a first region susceptible to being user-marked with user optically-readable information; and
(b) a second region susceptible to presenting information optically, said second region being arranged to be written to from the system for providing a user optically-readable indication of data content associated with said token.

Preferably, the system is arranged to interrogate said at least one token when spatially presented to the system for indicating to the system user-preferred data content to be subject to said operation.

Preferably, in the system, said at least one token is arranged to be interrogated from the system by at least one of: radio interrogation, optical interrogation, contact electrical interrogation, and magnetically-coupled electrical interrogation.

Preferably, in the system, said at least one token is provided with a unique identification code for use in enabling the system to identify said at least one token and thereby data content associated with said at least one token.

Preferably, in the system, said at least one token is provided with at least one corresponding region which is susceptible to being electronically programmed by the system to present visual information provided from the system, said visual information being related to data content associated with said at least one token.

Preferably, in the system, said at least one region is provided with electrically-writable ink for use in providing user-readable visual information of data content associated with said at least one token. More preferably, said at least one token is implemented in the form of at least one substantially plastics material planar substrate.

### DESCRIPTION OF THE DIAGRAMS

Embodiments of the invention will now be described, by way of example only, with reference to the accompanying diagrams wherein:
Figure 1 is a schematic diagram of an apparatus, namely a system, operable according to the method of the invention; and
Figure 2 is a schematic illustration of a card for use with the system of Figure 1.

### DESCRIPTION OF EMBODIMENTS OF THE INVENTION

In devising the present invention, the inventor has appreciated that when cards are employed as an interface for controlling electronic apparatus, for example for consumer electronic devices such as video and/or audio digital recorders, it is desirable to be able to print or otherwise present information on the cards to allow users to easily browse through content represented by the cards. Such printing enables users to sift through the cards in a manner akin to sifting through a collection of books, current CD's and older LP's. In a contemporary context where audio and/or video programme material is recorded in data files, such cards are envisaged by the inventor as being representative of digitally stored data also known as digital content.

By allowing users to write on the cards envisaged by the inventor, a more intuitive interface is offered to users not accustomed to computer-based interfaces providing complex menu-type lists on small and often difficult-to-read pixel displays.

The inventor has appreciated that the cards are usable, for example, for interfacing hard disc audio and/or digital recording equipment with DVD writers. When using the cards for such purpose such as transferring digital content from an item of recording equipment to a DVD writer, a user is capable of instructing transfer of the content by placing the card representing the content in or onto the DVD writer. If multiple functions are provided in one apparatus, for example a video tape recorder/player is collocated spatially together with a DVD recorder/player, such apparatus is susceptible to being provided with sensors in different regions thereof susceptible to detecting near proximity of the card for instructing various desired functions such as data content transfer, data content retrieval for replay, data content storage for recording, data content merging for creating compilations and data content editing, and data deletion for content erasing purposes. Thus, the user is capable of invoking one of more of these functions by physically placing the card corresponding to the content on various parts of the apparatus. In certain respects, as far as the user is concerned, the card is representative of the content and is therefore more easy to understand intuitively. For example, placing the card on a "trashcan" symbol provided on an outer surface of the apparatus is detected by a sensor in close proximity to the "trashcan" symbol, whereas placing the card on a CD symbol is detected by another sensor and results in transfers of the data content to a writable DVD within the apparatus.

Although the apparatus elucidated above is capable of providing a solution especially for managing content that is already recorded, it is not so optimally disposed for coping when actually recording the content. Moreover, it is does not address an issue of recording new content, managing such content and providing a readily readable index system for such new content.

If the content corresponds to a series of data items, for example a plurality of tracks on an audio CD, the user is able simply to apply an operation to all tracks by encircling an "all episode" region of the apparatus otherwise a particular function selected, for example "erase", will act on each selected track individually. Such encircling is beneficially achieved by using a pen-like device capable of activating a pressure-sensitive pixel switch matrix on the apparatus. Beneficially, the pen-like device is also susceptible to being used to identify individual tracks to be acted upon by the apparatus.

The apparatus is optionally arranged so that, on recording content, it generates a card in its output tray corresponding to data content which has just been recorded. In this respect, the card is operable as a form of physical token to represent associated content data in tangible form. Thus, the card so recorded is capable of bearing a representation of information presented in a programme guide of the apparatus at a time of recording data content. Preferably, the apparatus is arranged to include a card handling mechanism so that it can be loaded with a pack of such cards in blank form, namely without any content yet specified thereon. On the apparatus being instructed to download content, for example from a web-site in the Internet, the apparatus is operable to download the content and then record it in its internal memory; moreover, the apparatus is then also operable to record corresponding details and identification on a corresponding card from the pack and then pass this recorded card to an output tray of the apparatus where the user is able to collect the card and add it to his/her library of such cards, for example in a manner akin to a conventional collection of CD's. The library of cards is susceptible to being browsed through when the user desires to identify specific content to replay. Moreover, the cards are preferably of a physical size which is easy to manipulate by hand, for example as in a size substantially akin to a conventional debit card, namely in the order of 85 mm long, 54 mm wide and 0.6 mm thick.

In certain respects, the apparatus is akin to a contemporary printer linked to a contemporary personal computer where blank sheets of paper are fed into the printer and then printed out with a short abstract corresponding to a corresponding but much longer text document stored on disc memory of the computer; a user of the computer is able to place the sheet of paper bearing the abstract in a folder with abstracts of other documents. Subsequently, when the user wishes to access content, the user is able to browse through the paper sheets in the folder and read their abstracts. On identifying an abstract of interest, the user is able to read a reference name and/or number from the abstract to key this name and/or number into the computer and thereby find corresponding much longer content on the personal computer. In this analogy, the inventor has appreciated that the user will prefer to browse through the physical sheets in the folder rather than viewing a display screen of the personal computer bearing a long list of content names, especially if the display screen is small and of relatively poor resolution. The present invention is further evolved in that the apparatus is itself capable of interrogating reference details for stored content from one or more cards spatially presented to it without the user needing to intervene other than spatially presenting the one or more cards to appropriate spatial regions of the apparatus equipped with suitable sensors.

The present invention is especially applicable where future video and audio equipment includes relatively large amounts of memory and also employs efficient contemporary signal compression techniques. It is therefore possible, in a manner akin to a lap-top computer storing numerous programs and data files, for the apparatus to store a multiplicity of different video films and audio albums. Rather than using a keyboard and display to access such content, for example as employed in a contemporary lap-top computer to access data files and programs, the user of the apparatus is able to employ the aforementioned cards as physical representations of various data content stored in the apparatus. Such a representation is especially pertinent where the apparatus is capable of being coupled to the Internet for downloading data content therefrom, for example latest popular music songs and associated video clips. Unlike conventional audio CD's which are bought from retailers where data content is conveyed by way of the purchased data carrier, namely an imprinted metallic layer bearing laser-readable data in each CD bought, downloading data content from the Internet does not provide such a physical data carrier. Thus, the aforementioned cards of the invention are then very suitable as a tangible representation of the data content downloaded from the Internet, especially for those users who have become habitually used to handling physical DVD's and CD's having printed cover labels indicative of data content.

The aforementioned card of the invention is preferably reusable. For example, the cards include an area where users are able to write on them with ball-point pens or similar hand-writing tools. Alternatively, or additionally, the apparatus includes an ink jet printer for writing on the cards when corresponding content is first stored in the apparatus. Yet further, the cards can be provided with at least one visible surface thereon including an "e-ink", namely a material whose visual contrast is reversibly alterable electronically.

"E-inks" are contemporarily known. E-inks derive in one example from research undertaken by Bell Laboratories, a development unit of Lucent Technologies and E-Ink Corporation. For electronic paper-like displays, E-Ink's electronic ink and Lucent's active-matrix drive circuits are susceptible to being printed on plastic substrates, for example cards associated with the present invention. E-ink's electronic ink utilizes the principle of electrophoresis where the ink includes millions of minute "switchable" polymer microcapsules. Each transparent micro-capsule comprises several hundred positively-polarised sub-micron solid spheres of titanium dioxide and negatively-polarised black particles suspended in a clear fluid. A published international patent application no. WO 00/36560 (PCT/US99/30212) provides a further description of this e-ink technology.

Alternatively, Philips Research in Eindhoven, for example as reported in the Financial Times September 2003, has developed an electronic paper capable of displaying moving images. Oil and water form the basis of the electronic paper, the paper exploiting a characteristic that oil and water are immiscible. In a technique known as electrowetting, image display pixels are created in which coloured oil separates from water under influence of an applied electric field. There is thus included inside each pixel a substantially transparent electrode covered with a hydrophobic coating operable to repel water. When the electric field is applied to the electrode, a surface of the electrode begins to attract water molecules causing the oil to be displaced laterally within the pixel thereby revealing a white backing sheet. To allow a full range of colours to be displayed, each display pixel is arranged to comprise three sub-pixels, each sub-pixel including two primary-coloured oils in an associated pixel chamber including upper and lower water-repelling surfaces. Such pixels are operable to show primary colours and black, or to show white when biased so as to reflect red, green and blue light. Such electronic paper is capable of switching within a time interval of 10 msec and is capable of giving rise to displays a factor of four times brighter than conventional liquid crystal devices. Inks suitable for such electronic paper are described in recently published international patent applications no. WO 03/005116 (PCT/US02/20805) and WO 03/016992 (PCT/US02/26075), both patent applications having Philips Corp. named as Applicant.

The present invention is pertinent because it is directed at a fundamental shift in a way in which audio and visual content are anticipated to be increasingly distributed in future. Whereas users are presently aware of CD audio shops selling CD's, video shops selling DVD's and video rental shops selling video cassettes, they are also aware that such retailing outlets may decline in popularity in future as increasing amounts of audio and video data content is transferred, for example by pirating as well as bona fide authorised distribution, via the Internet and similar communication networks.

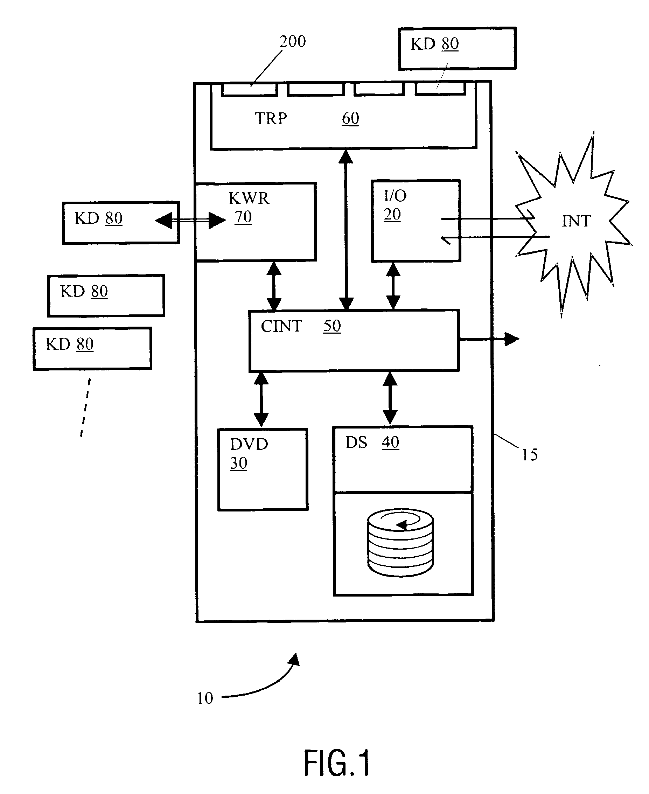

In order to further elucidate the present invention, embodiments thereof will now be described with reference to the accompanying diagrams. In Figure 1, there is shown an schematic diagram of the aforementioned apparatus indicated generally by 10; the apparatus 10 is effectively a data-handling system. The apparatus 10 comprises a plastic enclosure 15 housing a bi-directional Internet interface modem (I/O) 20 for communicating with the Internet (INT), a DVD recorder/player (DVD) 30, a data store (DS) 40, a computer interface (CINT) 50, a transducer panel (TRP) 60 and a card writer/reader (KWR) 70 capable of writing and reading data from a removable card (KD) 80. The computer interface 50 is coupled to the interface modem 20, to the DVD recorder/player 30, to the data store 40, to the transducer panel 60 and to the card writer/reader 70 as illustrated in a star-like configuration connectively centred on the computer interface 50. Unlike conventional computer devices, the transducer panel 60 presented on an exterior surface of the apparatus 10 accessible to a user of the apparatus 10 is devoid of conventional keyboards and displays which so often render contemporary computer-based equipment so difficult to use for many computer-inexperienced individuals.

The data store 40 is preferably at least one of a proprietary optical memory, a high-capacity magnetic hard-disc memory and a solid-state memory. When the store 40 is implemented as optical memory, it is preferably implemented in Blu-Ray relatively shorter wavelength proprietary optical technology, for example as being developed by Philips Corp.

In operation, the computer interface 50 is capable of being instructed by the user presenting the card 80, or similar cards thereto, to the card writer/reader 70 to perform various operations, for example:
(a) download data content from the Internet into the data store 40;
(b) erase an area of memory in the data store 40;
(c) transfer data between the data store 40 and the DVD recorder/player 30;
(d) erase an area of a disc inserted into the DVD recorder/player 30;
(e) rearrange data stored within the data store 40, for example when making compilations for subsequent storage on a DVD disc inserted into the DVD recorder/player 30; and
(f) where the card 80 is implemented in e-ink, at least one of erase and write information to the card 80, for example to provide an indication of modified associated data content.

As described in the foregoing, the apparatus 10 is capable of including a card handling mechanism (not shown) so that a pack of cards similar to the card 80 can be handled by the apparatus 10. The pack of cards can include one or more blank cards which the apparatus 10 is able to customize by recording content indicative data thereon to represent corresponding data content stored in the data store 40. Thus, a user of the apparatus 10 is capable to visiting a retailing store and purchasing a pack of blank cards compatible with the apparatus 10. The user can then load the pack of cards into the handling mechanism of the apparatus 10 and then subsequently download from the Internet or other similar communication network one or more items of content which are then stored in the data store 40. For each item of content stored in the data store 40, the apparatus 10 is operable to record corresponding content-indicative information onto an associated card of the pack loaded into the handling mechanism; at least a first part of the information is interpretable by the apparatus 10 and at least a second part of the information is interpretable by the user. If required, as described in the foregoing, the user can add further information which is further intelligible to the user, for example personal details using an indelible ink pen, for example a felt-tip pen and/or ball-point pen.

The apparatus 10 is also capable of reading when the blank card with content details recorded therein is subsequently presented to the apparatus 10. Each card 80 is capable of representing one or more items of content, for example an individual sound track or a plurality of sound tracks associated by the user together to provide a music album. Thus, each blank card 80 when customized is capable of representing at least one item of content.

The card handling mechanism is also capable of being configured to read a pack of cards having recorded thereon details of corresponding content stored in the data store 40. In consequence, the apparatus 10 is operable to play corresponding content as, for example, a sequence of presentations and/or medley. Such presentations and/or medley can be made in a sequence corresponding to a sequence that the pack of cards have when placed in the handling mechanism. Optionally, the apparatus 10 can be arranged to play content specified in the pack of cards in a pseudo-random sequence. Moreover, the apparatus 10 is also susceptible to being configured to cyclically repeat one or more items of content, for example where the apparatus 10 is employed as part of an advertising system, for example in a main window of retailing premises.

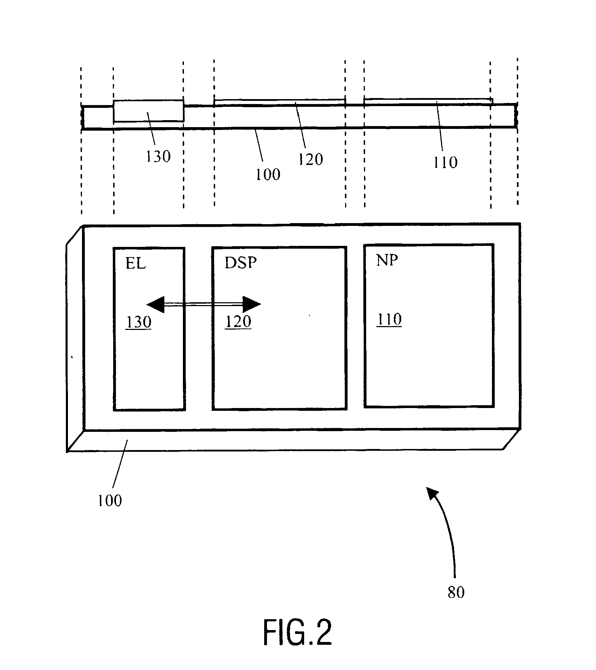

The card 80 will now be described in greater detail with reference to Figure 2.

In Figure 2, the card 80 is shown in perspective view and comprises a plastic substrate 100 formed during manufacture to provide a user-writable note-pad region (NP) 110 susceptible to be hand-written upon to receive user's notes, for example using a ball-point pen. Moreover, the card 80 further includes an e-ink display (DSP) 120 fabricated using e-ink technology as described in the foregoing. Furthermore, the card 80 includes an electronic module (EL) 130 electrically coupled to the display 120, for example by way of printed electrically-conductive connection tracks. Optionally, the module 130 includes an inductively couplable antenna for non-contact interfacing to the card 80. Beneficially, the note-pad region (NP) 110 is electronically erasable and the user is able to write upon the region 110 by using a special pen operable to cause electrically-reversible colour change thereon.

As described in the foregoing, the card 80 is preferably of a physical size akin to a conventional CD, audio minidisc or debit card.

If required, the note-pad region 110 and the display 120 are susceptible to being arranged to be spatially co-incident, namely overlaid rather than being two separate distinct regions.

In operation, in order to play pre-stored music from the data store 40, the user applies power to the apparatus 10 and then sifts through his/her selection of cards 80 to find one whose label information, namely as presented on the display 120 and/or on the note-pad region 110, corresponds to music desired to be played. The user then places the selected card 80 over a play transducer region 200 of the transducer panel 60 bearing a symbol thereon corresponding to play. The panel 60 senses presence of the card 80 over the play transducer region 200 and passes such information to the computer interface 50 which then supervises retrieval of corresponding data content from the data store 40 and decodes it, where appropriate, to provide an output at a terminal OUT which the user can connect, for example, to a hi-fi sound system comprising one or more power amplifiers and associated loudspeakers. Optionally, the apparatus 10 can be provided with an internal amplifier for driving headphones. Alternatively, or additionally, the apparatus 10 can be provided with an internal amplifier and at least one in-built loudspeaker for producing acoustic sound. When the user removes the card 80 from the play transducer region 200, the panel 60 detects such removal and passes corresponding information to the computer interface 50 which then terminates readout of data content from the data store 40.

Similar considerations pertain to a DVD inserted into the DVD recorder/player 30 where the card 80 can be used as a key to play the DVD. For example, the DVD is susceptible to being a compilation of several thousand compressed audio tracks, for example in contemporary MP3 format, which is inserted into the DVD recorder/player 30 each time the user desires to listen to audio programme material. One or more particular preferred tracks on the DVD are then selected by placing the card 80 corresponding to the desired one or more tracks over a play symbol of the play transducer region on the panel 60. The user then primary associates the one or more particular tracks with the card 80 rather than the DVD which is merely inserted when audio programme material in general is to be replayed. Were it not for the cards 80 in combination with the panel 60, the apparatus 10 would have to be supplied with a display and keyboard to select audio tracks with menu-like lists to select amongst which is awkward and laborious as elucidated in the foregoing. Such an alternative arrangement is appreciated by the inventor as being awkward to use and not intuitive in nature.

Similar considerations pertain when reading out data content from the data store 40 which preferably has a data capacity in excess of a DVD, for example in a manner of a hard disk unit in a contemporary portable lap-top computer which is often not detachable from the lap-top computer.

In order to register that a particular card 80 corresponds to particular corresponding content stored on a DVD inserted into the DVD recorder/player 30 or on the data store 40, the user inserts the card 80 into the card writer/reader 70 which then records indicative reference data in the electronic module 130 and optionally also on the display 120. The card 80 is coupled electrically to the card writer/reader 70 by at least one of electrical contacts, inductive loop coupling and radio-frequency radiation. Such coupling in the case of radio-frequency radiation is beneficially implemented by way of proprietary Blue-Tooth technology which is becoming an international standard for which standard mass-produced components such as Blue-Tooth integrated circuit transponders are becoming widely available from numerous vendors. As a further option, optical coupling may additionally, or alternatively, be employed.

If required, the electronic module 130 can be omitted from the card 80 to save cost to provide a corresponding basic card, each such basic card being provided with a unique code on manufacture. For example, the card 80 can be rendered as a standard item including laser-severable conductive links which are preferentially severed to provide each card 80 with a unique serial number. Moreover, connection to the severable links can be implemented inductively whereas connection directly to the display 120 is preferably implemented by way of electrical contact pads. Moreover, the display 120 is preferably arranged to retain visual information thereon after disconnection from the apparatus 10. Information is then writable or erasable from the display 120 when the card 80 is coupled to the card writer/reader 70. Moreover, when the card 80 is presented to the panel 60, its serial number can be read inductively from the panel 60. The computer interface 50 is capable then of associating the serial number of the card 80 so rendered with one or more particular items, for example, stored in the data store 40; moreover, the user is informed of what data content the card 80 is associated by way of information presented on the display 120 of the card 80. Thus, by circumventing a need to include the electronic module 130, the cost of manufacturing the card 80 is susceptible to being reduced.

As an alternative to employing conductive links which are susceptible to being interrogated electronically, a printed bar code can be used on the card wherein the panel 60 is then arranged to include one or more optical sensors capable of reading such a bar code. Thus in a simple implementation, the card includes a substrate, an e-ink display coupled to electrical contact pads and an optical bar code susceptible to being interrogated optically.

The apparatus 10 is capable of being implemented as a miniature portable device, physically akin to a mobile telephone in physical size. Alternatively, it may be implemented in the manner of a domestic high-fidelity unit susceptible to being mounted on a shelf or table surface. As a further alternative, the apparatus 10 is susceptible to being adapted for automotive use. As a consequence of the cards 80 themselves not including corresponding data content but such data content being stored remotely from the cards 80, the apparatus 10 is beneficial in assisting to prevent pirating of data content as merely copying the content of the cards 80 provides multiple "keys" for operating the apparatus 10 rather than copying of substantially data content.

It will appreciated that embodiments of the invention described in the foregoing are susceptible to being modified without departing from the scope of the invention.

For example, at least one of the data store 30 and the DVD recorder/player (DVD) 40 are susceptible to being arranged to output data therefrom and/or input data thereto directly. Such a modified form of the apparatus 10, the computer interface 50 is thereby bypassing other than supervising data transfer within the apparatus 10 and recording it visibly on the card 80 where appropriate, for example to list later-added data content.

The invention resides in each and every novel characteristic feature and each and every combination of characteristic features. Reference numerals in the claims do not limit their protective scope. Use of the verb "to include" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The invention can be implemented by means of hardware comprising several distinct elements, and by means of a suitably programmed computer. In the system claim enumerating several means, several of these means can be embodied by one and the same item of hardware.

## Claims

1. An electronic system (10) for providing visible feedback via at least one data token (80), the system (10) including:
(a) computing means (50);
(b) a data store (40) coupled to said computing means (50) for at least one of inputting data and outputting data content from the store (40); and
(c) token interfacing means (60, 70) coupled to said computing means (50) for interfacing to at least one data token (80) detachable from the system (10), said at least one token (80) for representing data content in the store (40),
wherein the system (10) is arranged to perform operations including at least one of delete, read, write, and rearrange data content associated with said at least one token (80), and
to read from said at least one token (80) using the token interfacing means (60, 70) details of said data content to identify said data content and/or to record on said at least one token (80) using the token interfacing means (60, 70) one or more details of said operations so that said one or more details are optically readable from said at least one token (80) when user-inspected, thereby enabling said at least one token (80) to be a representation in tangible form of corresponding data content stored in the data store (40), **characterised in that** the system (10) is arranged to
(i) record on a display (120) of said at least one token (80) content-indicative visual information that is erasable from said display (120) when the at least one token (80) is coupled to the token interfacing means (60,70) and/or
(ii) to record content-indicative information onto said at least one token (80) of which at least a first part is interpretable by the system (10) and at least a second part by a user.

2. A system (10) according to Claim 1, wherein the token interfacing means (60) is subdivided into spatial sub-regions (200), each sub-region (200) being associated with a specific type of corresponding operation on the data content represented by said at least one token (80) when presented in spatial proximity of said sub-region (200).

3. A system (10) according to Claim 1, wherein the token interfacing means (60) is arranged to be capable of handling a pack comprising a plurality of said at least one token (80) and performing said operation on at least one token (80) in the pack.

4. A system according to Claim 1, wherein the computing means (50) is arranged so as to prevent said data content from being subject to at least a sub-set of said operation when its corresponding token (80) is spatially remote from the token interfacing means (50, 60).

5. A system (10) according to Claim 1, wherein said at least one token (80) is provided with:
(a) a first region (110) susceptible to being user-marked with user optically readable information; and
(b) a second region (120) susceptible to presenting information optically, said second region (120) being arranged to be written to from the system (10) for providing a user optically-readable indication of data content associated with said token (80).

6. A system (10) according to Claim 1, wherein the system (10) is arranged to interrogate said at least one token (80) when spatially presented to the system (10) for indicating to the system (10) user-preferred data content to be subject to said operation.

7. A system (10) according to Claim 6, wherein said at least one token (80) is arranged to be interrogated from the system (10) by at least one of: radio interrogation, optical interrogation, contact electrical interrogation, and magnetically-coupled electrical interrogation.

8. A system (10) according to Claim 6, wherein the system (10) is able to identify said at least one token (80) and thereby data content associated with said at least one token (80) using a unique identification code with which said at least one token (80) is provided.

9. A system (10) according to Claim 1, wherein said display (120) of said at least one token (80) is comprised in one of at least one corresponding region (120) which is susceptible to being electronically programmed by the system (10) to present visual information provided from the system (10), said visual information being related to data content associated with said at least one token (80).

10. A system (10) according to Claim 9, wherein said at least one region (120) is provided with electrically-writable ink for use in providing user-readable visual information of data content associated with said at least one token (80).

11. A system (10) according to Claim 1, wherein said at least one token (80) is implemented in the form of at least one substantially plastics material planar substrate.

12. A method of providing visible feedback for an electronic system (10) via at least one data token (80), the method including the step of:
(a) providing the system (10) with computing means (50), a data store (40) coupled to said computing means (50) for at least one of inputting data and outputting data content from the store (40), and token interfacing means (60, 70) coupled to said computing means (50) for interfacing to at least one data token (80) detachable from the system (10), said at least one token (80) for representing data content in the store (40), further comprising the step of:
(b) on performing an operation of at least one of deleting, reading, writing, and rearranging data content associated with said at least one token (80), arranging for the system (10) to read from said at least one token (80) using the token interfacing means (60, 70) details of said data content to identify said data content and/or to record on said at least one token (80) using the token interfacing means (60, 70) one or more details of said operation so that said one or more details are optically readable from said at least one token (80) when user-inspected, thereby enabling said at least one token (80) to be a representation in tangible form of corresponding data content stored in the data store (40), **characterised in that** the system (10) is arranged to
(i) record on a display (120) of said at least one token (80) content-indicative visual information that is erasable from said display (120) when the at least one token (80) is coupled to the token interfacing means (60,70) and/or
(ii) to record content-indicative information onto said at least one token (80) of which at least a first part is interpretable by the system (10) and at least a second part by a user.

## Patentansprüche

1. Elektronisches System (10) zur Bereitstellung sichtbarer Rückmeldung über zumindest ein Data-Token (80), wobei das System (10) enthält:
(a) Rechenmittel (50);
(b) einen an die Rechenmittel (50) gekoppelten Datenspeicher (40), um zumindest Daten einzugeben oder einen Dateninhalt aus dem Speicher (40) auszugeben; sowie
(c) an die Rechenmittel (50) gekoppelte Token-Schnittstellenmittel (60, 70), um diese mit mindestens einem Data-Token (80) von dem System (10) trennbar zu verbinden, wobei der mindestens eine Token (80) zur Darstellung des Dateninhalts in dem Speicher (40) dient,
wobei das System (10) angeordnet ist, um Operationen durchzuführen, die zumindest das Löschen, Lesen, Schreiben oder Reorganisieren des dem mindestens einen Token (80) zugeordneten Dateninhalts umfassen, und
Details des Dateninhalts aus dem mindestens einen Token (80) unter Verwendung der Token-Schnittstellenmittel (60, 70) zu lesen, um den Dateninhalt zu identifizieren und/oder ein oder mehrere Details der Operationen unter Verwendung der Token-Schnittstellenmittel (60, 70) auf dem mindestens einen Token (80) aufzuzeichnen, so dass ein oder mehrere Details bei Prüfung seitens des Anwenders aus dem mindestens einen Token (80) optisch lesbar sind, wodurch der mindestens eine Token (80) eine Darstellung des entsprechenden, in dem Datenspeicher (40) gespeicherten Dateninhalts in konkreter Form sein kann, **dadurch gekennzeichnet, dass** das System (10) angeordnet ist, um
(i) auf einem Display (120) des mindestens einen Token (80) inhaltsanzeigende, visuelle Informationen aufzuzeichnen, die vom Display (120) löschbar sind, wenn der mindestens eine Token (80) an die Token-Schnittstellenmittel (60, 70) gekoppelt ist, und/oder um
(ii) inhaltsanzeigende Informationen auf dem mindestens einen Token (80) aufzuzeichnen, von denen zumindest ein erster Teil von dem System (10) und zumindest ein zweiter Teil von einem Anwender interpretierbar ist.

2. System (10) nach Anspruch 1, wobei die Token-Schnittstellenmittel (60) in räumliche Teilbereiche (200) unterteilt sind, wobei jeder Teilbereich (200) einer spezifischen Art einer entsprechenden Operation bezüglich des durch den mindestens einen Token (80) dargestellten Dateninhalts zugeordnet ist, wenn er in räumlicher Nähe des Teilbereichs (200) präsentiert wird.

3. System nach Anspruch 1, wobei die Token-Schnittstellenmittel (60) so angeordnet sind, dass sie imstande sind, ein Pack, welches mehrere des mindestens einen Token (80) umfasst, zu verarbeiten und die Operation bezüglich mindestens eines Token (80) in dem Pack durchzuführen.

4. System nach Anspruch 1, wobei die Rechenmittel (50) angeordnet sind, um zu verhindern, dass der Dateninhalt wenigstens einem Teilsatz der Operation unterworfen wird, wenn sein entsprechender Token (80) von den Token-Schnittstellenmitteln (50, 60) räumlich entfernt ist.

5. System nach Anspruch 1, wobei der mindestens eine Token (80) versehen ist mit:
(a) einem ersten Bereich (110), der seitens des Anwenders mit vom Anwender optisch lesbaren Informationen markiert werden kann; sowie
(b) einem zweiten Bereich (120), der imstande ist, Informationen optisch darzustellen, wobei der zweite Bereich (120) vorgesehen ist, um von dem System (10) beschrieben zu werden, um eine seitens des Anwenders optisch lesbare Angabe des dem Token (80) zugeordneten Dateninhalts bereitzustellen.

6. System nach Anspruch 1, wobei das System (10) angeordnet ist, um den mindestens eine Token (80) abzufragen, wenn dieser dem System (10) räumlich präsentiert worden ist, um das System (10) auf vom Anwender bevorzugten, der Operation unterliegenden Dateninhalt hinzuweisen.

7. System (10) nach Anspruch 6, wobei der mindestens eine Token (80) angeordnet ist, um durch mindestens eine der folgenden Abfragen von dem System (10) abgefragt zu werden: Funkabfrage, optische Abfrage, elektrische Kontaktabfrage sowie magnetisch gekoppelte, elektrische Abfrage.

8. System (10) nach Anspruch 6, wobei das System (10) imstande ist, den mindestens einen Token (80) und damit den dem mindestens einen Token (80) zugeordneten Dateninhalt unter Verwendung eines eindeutigen Kennungscodes, mit dem der mindestens eine Token (80) versehen ist, zu identifizieren.

9. System (10) nach Anspruch 1, wobei das Display (120) des mindestens einen Token aus mindestens einem entsprechenden Bereich (120) besteht, welcher von dem System (10) elektronisch programmiert werden kann, um von dem System (10) bereitgestellte, visuelle Informationen zu präsentieren, wobei die visuellen Informationen auf den dem mindestens einen Token (80) zugeordneten Dateninhalt bezogen sind.

10. System (10) nach Anspruch 9, wobei der mindestens eine Bereich (120) mit elektrisch schreibbarer Tinte versehen ist, um vom Anwender lesbare, visuelle Informationen des dem mindestens einen Token (80) zugeordneten Dateninhalts vorzusehen.

11. System (10) nach Anspruch 1, wobei der mindestens eine Token (80) in Form von mindestens einem, im Wesentlichen planaren Kunststoffsubstrat implementiert wird.

12. Verfahren zur Bereitstellung sichtbarer Rückkopplung für ein elektronisches System (10) über mindestens einen Data-Token (80), wobei das Verfahren die folgenden Schritte umfasst:
(a) Versehen des Systems (80) mit Rechenmitteln (50), einem an die Rechenmittel (50) gekoppelten Datenspeicher (40), um zumindest Dateninhalt in den Speicher (40) einzugeben oder aus diesem auszugeben, sowie an die Rechenmittel (50) gekoppelte Token-Schnittstellenmittel (60, 70), um diese mit dem mindestens einen Data-Token (80) von dem System (10) trennbar zu verbinden, wobei der mindestens eine Token (80) zur Darstellung des Dateninhalts in dem Speicher (40) dient, wobei nach dem Verfahren weiterhin:
(b) das System bei Durchführen einer Operation, die zumindest das Löschen, Lesen, Schreiben oder Reorganisieren des dem mindestens einen Token (80) zugeordneten Dateninhalts umfasst, die Aufgabe hat, Details des Dateninhalts aus dem mindestens einen Token (80) unter Verwendung der Token-Schnittstellenmittel (60, 70) zu lesen, um den Dateninhalt zu identifizieren und/oder ein oder mehrere Details der Operationen unter Verwendung der Token-Schnitstellenmittel (60, 70) auf den mindestens einen Token (80) aufzuzeichnen, so dass ein oder mehrere Details bei Prüfung seitens des Anwenders aus dem mindestens einen Token (80) optisch lesbar sind, wodurch der mindestens eine Token (80) eine Darstellung des entsprechenden, in dem Datenspeicher (40) gespeicherten Dateninhalts in konkreter Form sein kann, **dadurch gekennzeichnet, dass** das System (10) angeordnet ist, um
(i) auf einem Display (120) des mindestens einen Token (80) inhaltsanzeigende, visuelle Informationen aufzuzeichnen, die vom Display (120) löschbar sind, wenn der mindestens eine Token (80) an die Token-Schnittstellenmittel (60, 70) gekoppelt ist, und/oder um
(ii) inhaltsanzeigende Informationen auf den mindestens einen Token (80) aufzuzeichnen, von denen zumindest ein erster Teil von dem System (10) und zumindest ein zweiter Teil von einem Anwender interpretierbar ist.

## Revendications

1. Système électronique (10) pour fournir une rétroaction visible par le biais d'au moins un jeton de données (80), le système (10) comprenant :
(a) des moyens de calcul (50) ;
(b) une mémoire de données (40) qui est couplée audits moyens de calcul (50) pour au moins une de l'introduction du contenu de données et de la sortie du contenu de données à partir de la mémoire (40) ; et
(c) des moyens d'interfaçage de jeton (60, 70) qui sont couplés audits moyens de calcul (50) pour l'interfaçage à au moins un jeton de données (80) qui est amovible du système (10), ledit au moins un jeton (80) pour représenter le contenu de données dans la mémoire (40),
dans lequel le système (10) est agencé de manière à :
exécuter des opérations comprenant au moins une de suppression, de lecture, de l'écriture, et à réarranger le contenu de données qui est associé audit au moins un jeton (80), et
lire à partir dudit au moins un jeton (80), en utilisant les moyens d'interfaçage de jeton (60, 70), des détails dudit contenu de données pour identifier ledit contenu de données et/ou à enregistrer sur ledit au moins un jeton (80), en utilisant les moyens d'interfaçage de jeton (60, 70), un ou plus détails desdites opérations, de sorte que ledit un ou lesdits plusieurs détails sont optiquement lisibles à partir dudit au moins un jeton (80) dans le cas de contrôle par l'utilisateur, de ce fait permettant que ledit au moins un jeton (80) soit une représentation sous forme tangible du contenu de données correspondant qui est stocké dans la mémoire de données (40), **caractérisé en ce que** le système (10) est agencé de manière à :
(i) enregistrer, sur un dispositif d'affichage (120) dudit au moins un jeton (80), de l'information visuelle indicative du contenu qui est effaçable dudit dispositif d'affichage (120) lorsqu'au moins un jeton (80) est couplé aux moyens d'interfaçage de jeton (60, 70), et/ou
enregistrer de l'information indicative du contenu sur ledit au moins un jeton (80) dont au moins une première partie est interprétable par le système (10) et dont au moins une deuxième partie est interprétable par un utilisateur.

2. Système (10) selon la revendication 1, dans lequel les moyens d'interfaçage de jeton (60) sont subdivisés en des sous-régions spatiales (200), chaque sous-région (200) étant associée à un type spécifique d'une opération correspondante sur le contenu de données qui est représenté par ledit au moins un jeton (80) lorsqu'il est présenté dans une proximité spatiale de ladite sous-région (200).

3. Système (10) selon la revendication 1, dans lequel les moyens d'interfaçage de jeton (60) sont agencés de manière à être capables de manipuler un paquet comprenant une pluralité dudit au moins un jeton (80) et d'exécuter ladite opération sur au moins un jeton (80) dans le paquet.

4. Système selon la revendication 1, dans lequel les moyens de calcul (50) sont agencés de manière à éviter que ledit contenu de données ne soit sujet à au moins un sous-ensemble de ladite opération lorsque son jeton correspondant (80) est spatialement espacé des moyens d'interfaçage de jeton (50, 60).

5. Système (10) selon la revendication 1, dans lequel ledit au moins un jeton (80) est pourvu de :
(a) une première région (110) qui est susceptible d'être marquée, par un utilisateur, de l'information optiquement lisible par l'utilisateur ; et
(b) une deuxième région (120) qui est susceptible de présenter de l'information optiquement lisible, ladite deuxième région (120) étant agencée de manière à être écrite à partir du système (10) pour fournir une indication optiquement lisible par l'utilisateur du contenu de données qui est associé audit jeton (80).

6. Système (10) selon la revendication 1, dans lequel le système (10) est agencé de manière à interroger ledit au moins un jeton (80) lorsqu'il est présenté spatialement au système (10) pour indiquer au système (10) que le contenu de données préféré par l'utilisateur est sujet à ladite opération.

7. Système (10) selon la revendication 6, dans lequel ledit au moins un jeton (80) est agencé de manière à être interrogé à partir du système (10) par l'au moins une des interrogations suivantes : l'interrogation radio, l'interrogation optique, l'interrogation électrique de contact et l'interrogation électrique magnétiquement couplée.

8. Système (10) selon la revendication (6), dans lequel le système (10) est capable d'identifier ledit au moins un jeton (80) et de ce fait le contenu de données qui est associé audit au moins un jeton (80) en utilisant un code d'identification unique duquel ledit au moins un jeton (80) est pourvu.

9. Système (10) selon la revendication 1, dans lequel ledit dispositif d'affichage (120) dudit au moins un jeton (80) est contenu dans une d'au moins une région correspondante (120) qui est susceptible d'être électroniquement programmée par le système (10) pour présenter de l'information visuelle qui est fournie à partir du système (10), ladite information visuelle étant liée au contenu de données qui est associé audit au moins un jeton (80).

10. Système (10) selon la revendication 9, dans lequel ladite au moins une région (120) est pourvue d'encre électriquement inscriptible pour être utilisée pour fournir de l'information visuelle lisible par l'utilisateur du contenu de données qui est associé audit un jeton (80).

11. Système (10) selon la revendication 1, dans lequel ledit au moins un jeton (80) est mis en oeuvre sous la forme d'au moins un substrat planaire en matière sensiblement plastique.

12. Procédé pour fournir une rétroaction visible pour un système électronique (10) par le biais d'au moins un jeton de données (80), le procédé comprenant l'étape suivante consistant à :
(a) pourvoir le système (10) des moyens de calcul (50) ; d'une mémoire de données (40) qui est couplée audits moyens de calcul (50) pour au moins une de l'introduction du contenu de données et de la sortie du contenu de données à partir de la mémoire (40) ; et de moyens d'interfaçage de jeton (60, 70) qui sont couplés audits moyens de calcul (50) pour l'interfaçage à au moins un jeton de données (80) qui est amovible du système (10), ledit au moins un jeton (80) pour représenter le contenu de données dans la mémoire (40), comprenant encore l'étape suivante consistant à :
(b) agencer le système (10), à l'exécution d'une opération comprenant au moins une de suppression, de lecture, de l'écriture et de réarrangement du contenu de données qui est associé audit au moins un jeton (80), de manière à lire, à partir dudit au moins un jeton (80) en utilisant les moyens d'interfaçage de jeton (60, 70), les détails dudit contenu de données pour identifier ledit contenu de données et/ou pour enregistrer, sur ledit au moins un jeton (80) en utilisant les moyens d'interfaçage de jeton (60, 70), un ou plusieurs détails de ladite opération, de sorte que ledit un ou lesdits plusieurs détails sont optiquement lisibles à partir dudit au moins un jeton (80) dans le cas de contrôle par l'utilisateur, de ce fait permettant que ledit au moins un jeton (80) soit une représentation sous forme tangible du contenu de données correspondant qui est stocké dans la mémoire de données (40), **caractérisé en ce que** le système (10) est agencé de manière à :
(i) enregistrer, sur un dispositif d'affichage (120) dudit au moins un jeton (80), de l'information visuelle indicative du contenu qui est effaçable dudit dispositif d'affichage (120) lorsque l'au moins un jeton (80) est couplé aux moyens d'interfaçage de jeton (60, 70), et/ou
enregistrer de l'information indicative du contenu sur ledit au moins un jeton (80) dont au moins une première partie est interprétable par le système (10) et dont au moins une deuxième partie est interprétable par un utilisateur.
